# EUROPEAN PATENT APPLICATION

(11) **EP 1 274 074 A2**
(43) Date of publication of application: **08.01.2003**
(21) Application number: 02254640.2
(22) Date of filing: 02.07.2002
(51) Int. Cl.: G11B 7/007, G11B 7/24

(54) **High density disc**

(30) Priority: 05.07.2001 KR 2001040052
(71) Applicant: SAMSUNG ELECTRONICS CO., LTD., Suwon-City, Kyungki-do (KR)
(72) Inventor: Lee, Yong-hoon, Padalgu, Suwon-si, Gyeonggi-do (KR); Park, In-sik, Padalgu, Suwon-si, Gyeonggi-do (KR); Chung, Chong-sam, Paldal-gu, Suwon-si, Gyeonggi-do (KR); Yoon, Du-seop, Gwonseon-gu, Suwon-si, Gyeonggi-do (KR); Lee, Kyung-geun, Bundang-gu, Seongnam-si, Gyeonggi-do (KR); Kang, Heui-jong, Giheung-eub, Yongin-si, Gyeonggi-do (KR); Choi, Han-kook, Paldal-gu, Suwon-si, Gyeonggi-do (KR)
(74) Representative: Robinson, Ian Michael

(57) **Abstract**

A high density disc having a data area (130) which is set to maintain compatibility with existing drives while providing a superior recording/reproducing feature. The high density disc has a center hole (100), a clamping area (110), a data area (130) where user data is recorded, a lead-in area (120) located at the inner side of the data area, and a lead-out area (140) located at the outer side of the data area. In the high density disc the diameter of the center hole (100) is 10 mm or more, and the inner diameter of the clamping area (110) is characteristically within a range of 20-26 mm. Also, the inner diameter of the data area (130) is characteristically within a range of 35-40 mm. Therefore, while a conventional disc drive is still used, the size of the high density disc decreases and a recording capacity can be increased.

## Description

The present invention relates to a high density disc, and more particularly, to a high density disc in which a data area is set to secure compatibility in the same drive while maintaining a superior recording/reproducing feature and a recording capacity.

In general, an optical disc is widely used as an information recording medium of an optical pickup apparatus for recording/reproducing information in a noncontact manner. The optical disc is divided into compact discs (CDs) and digital versatile discs (DVDs) according to its information recording capacity. Here, mini discs (MD) having a diameter of 65 mm or less may be added to the above classification.

These optical discs can be further divided into read only discs such as CD-ROMs (read only memory) and DVD-ROMs, and recordable discs such as CD-RWs and DVD-RAMs.

A CD is 1.2 mm thick and formed of polycarbonate (PC). The CD is reproduced by using a laser diode having a wavelength of 780 nm and has a track pitch of 1.6 µm and a recording capacity of 650 MB on a single side having an outer diameter of 120 mm.

In the case of a DVD, a polycarbonate reinforcement plate having a thickness of 0.6 mm is attached to a substrate having a thickness of 0.6 mm, this forming a 1.2 mm thickness, so that the DVD is compatible with a CD-ROM drive. When a DVD is a single side disc of a 120 mm diameter, the recording capacity amounts to 4.7 GB. Also, a double side DVD having a recording capacity of 9.4 GB is formed by combining two 0.6 mm discs. The DVD is reproduced by a laser diode of a 650 nm wavelength and an objective lens having an NA of 0.65 and has a track pitch of about 0.74 µm. Also, a DVD having a diameter of 80 mm has a recording capacity of 1.47 GB corresponding to the recording capacity of two CDs.

Further, a high density disc, that is, an HD-DVD, has a recording capacity of about 25 GB on a single side of a 120 mm diameter. The HD-DVD is recorded and/or reproduced by using a laser diode of a 400 nm wavelength and an objective lens having an NA of 0.85 and has a track pitch of about 0.3 µm. Also, an HD-DVD having a 80 mm diameter has a recording capacity of about 7.8 GB.

Meanwhile, an HD TV requires a disc which can record and/reproduce a 135 minutes movie for HD. The disc for HD requires a recording capacity for recording and/or reproduction of about 23 GB or more on a single side of a disc having a 120 mm diameter, although not standardized yet.

The specifications of a CD and DVD are shown below in Table 1.

**[Table 1]**

| | CD | DVD |
|---|---|---|
| Diameter of disc (mm) | 120 | 120 |
| Thickness of disc (mm) | 1.2 | 1.2 |
| Thickness of information substrate (mm) | 1.2 | 0.6 |
| Track pitch (µm) | 1.6 | 0.74 |
| Size of minimum pit (µm) | 0.83 | 0.4 |
| Wavelength of laser beam (µm) | 780 | 635/650 |
| NA of objective lens (NA) | 0.5 | 0.65 |
| Capacity of single side disc (GB) | 0.65 | 4.7(1.47) |

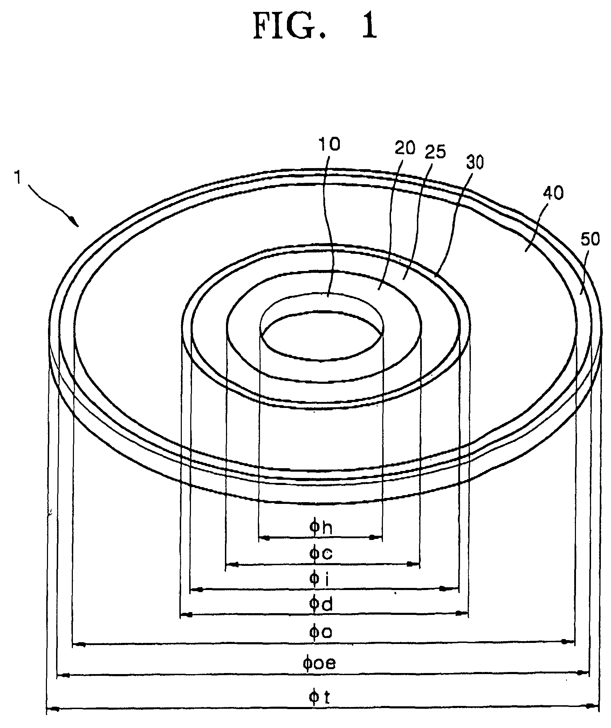

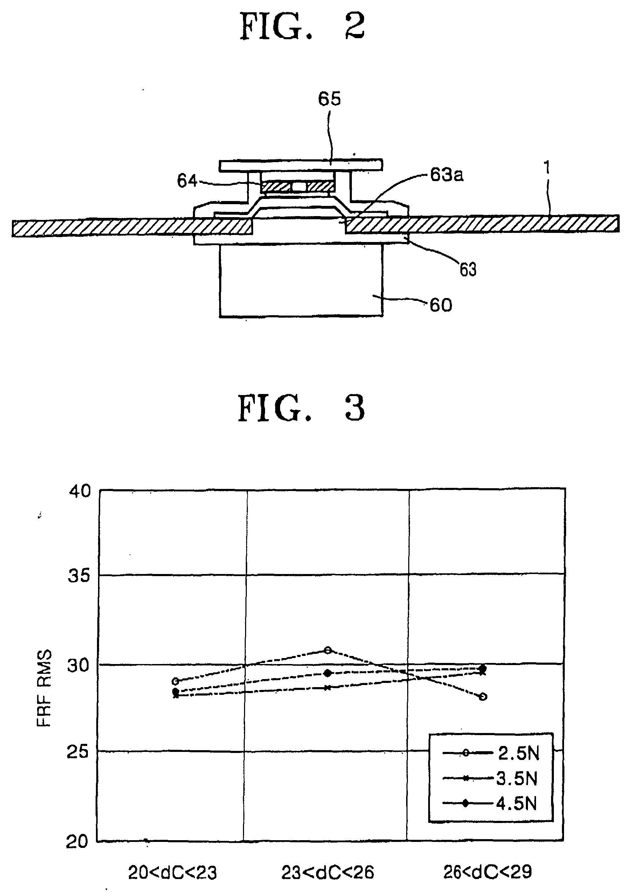

Figure 1 shows the structure of a disc 1 such as a CD or DVD. Referring to the drawing, the high density disc 1 can be divided into a center hole 10, a clamping area 20 for accommodating the high density disc 1 on a turntable (63 of Figure 2) of a reproduction drive to be described later, a lead-in area 30 from which data begins to record, a data area 40 for recording user data, and a lead-out area 50 at which the data area 40 ends.

Reproduction only data, such as the size of the high density disc 1, the number of tracks on a surface to be read, or copy protection information, can be recorded in the lead-in area 30. The data area 40 is an area where a user can record and/or reproduce information. Also , other information related to the high density disc is recorded in the lead-out area 50. Reference numeral 25 denotes an area where a stack ring (not shown) is formed to prevent deterioration of productivity due to contact of disc recording surfaces when disc manufactured during a disc injection step are stacked.

Figure 2 shows a disc chucking apparatus of the disc 1. Here, the chucking apparatus of the high density disc 1 includes a spindle motor 60 for rotating the high density disc 1, a turntable 63 fixed to a rotation shaft of the spindle motor 60, on which the high density disc 1 is placed, and a clamping member 65 closely pressing the high density disc 1 against the turntable 63. As the high density disc 1 is closely pressed and fixed between the turntable 63 and the clamping member 65, when the high density disc 1 is rotated by the spindle motor 60, information can be reproduced without the high density disc 1 trembling.

A protruding portion 63a protruding from the center of the turntable 63 is inserted in the center hole 10 of the high density disc 1. A magnetic body 64 is provided at the turntable 63 or the clamping member 65 so that the high density disc 1 is fixed by a magnetic force of the magnetic body 64. Here, an area of the high density disc 1 contacting the clamping member 65 is the clamping area 20.

In conventional CDs or DVDs, when the outer diameter (Φ t) of the entire disc is 120 mm or 80 mm, the size of the center hole 10 is specified to be a diameter (Φ h) of 15 mm. Also, the outer diameter of the clamping area 20 is specified to be a diameter (Φ c) of about 32.7 mm.

The lead-in area 30 has a diameter of 46-50 mm or 45.2-48 mm for a CD or DVD, respectively. The inner diameter (Φ d) of the data area 40 is 48.2 mm. In the case of DVD+RW, the inner diameter (Φ i) of the lead-in area 30 is specified to be 44.0 mm. For a disc having a diameter of 120 mm, the outer diameter (Φ oe) of the lead-out area 50 is up to 117 mm. For a disc having a diameter of 80 mm, the outer diameter (Φ oe) of the lead-out area 50 is up to 78 mm.

However, when the overall diameter of a disc is small, for example, the overall diameter (Φ t) of a disc is 64 mm, if the position (Φ d) where user data starts is set to be a diameter of 48.2 mm as in the CD or DVD, data recording capacity is not sufficient. Further, it the above specification is applied to a disc having an overall diameter of 50 mm, substantially no data area exists. If the diameter of the center hole 10 is formed to be less than 15 mm to compensate for the insufficient data area, a problem of compatibility with a disc drive for a disc having an overall diameter of 120 mm or 80 mm occurs.

It has been proposed to decrease the size of the clamping area 20 to secure the recording capacity of a disc. However, since the diameter (Φ c) of the clamping area 20 is limited to be within 33.0 mm, it is difficult to secure compatibility with a disc drive and simultaneously increase the recording capacity. The size of the clamping area 20 is determined by a deviation factor of a disc, the number of rotation of the spindle motor 60, or the clamping force of a disc. Since a vibration feature of a disc deteriorates when the clamping area 20 is reduced, there is a certain limit in decreasing the clamping area 20. Presently, most spindle motors 60 for CD-ROMs or DVD-RAMs has an outer diameter of 28.0 mm or less and the outer diameter of the turntable 63 is 30.0 mm or less, which satisfies the size of the clamping area of a disc, that is, a diameter of 33.0 mm or less.

Since the conventional high density disc such as a CD or DVD is large, a drive for the high density disc is accordingly large and difficult to carry. Considering portability first, a high density disc having a less diameter must be used. When the diameter of a disc decreases, recording capacity decreases so that data cannot be recorded sufficiently. Also, repetition of recording is restricted and accordingly free editing is restricted, which prevents an increase of value of data. Thus, a new high density disc is needed so that a high density recording capacity is secured and simultaneously a small disc can be compatibly recorded/reproduced in the same drive

It is an aim of the present invention to provide a small and high density disc which can be compatibly used in a conventional disc drive while securing a high density recording capacity.

According to a first aspect of the present invention there is provided a high density disc comprising a center hole having a diameter of 10 mm or more, a clamping area, a data area where user data is recorded, a lead-in area located at the inner side of the data area, and a lead-out area located at the outer side of the data area, in which the inner diameter of the clamping area is within a range of 20-26 mm.

It is preferred in the present invention that the inner diameter of the lead-in area is within a range of 33-36 mm.

It is preferred in the present invention that the inner diameter of the data area is within a range of 35-40 mm.

It is preferred in the present invention that, when the inner diameter of the data area is 36 mm, the outer diameter thereof is within a range of 39-44 mm.

It is preferred in the present invention that, when the inner diameter of the data area is 40 mm, the outer diameter thereof is within a range of 42-48 mm.

It is preferred in the present invention that the high density disc comprises at least one transparent substrate and at least one recording layer, and the thickness of the transparent substrate is 0.2 mm or less.

It is preferred in the present invention that the boundary between the data area and the lead-out area is within a range of 62-64 mm.

It is preferred in the present invention that the boundary between the data area and the lead-out area is within a range of 76-79 mm.

It is preferred in the present invention that the boundary between the data area and the lead-out area is within a range of 116-119 mm.

It is preferred in the present invention that a metal plate is inserted into the center hole.

It is preferred in the present invention that the high density disc comprises a groove track and a land track, and recording can be performed at least one of the groove track and land track.

According to a second aspect of the present invention there is provided a high density disc comprising a center hole having a diameter of 10 mm or more, a clamping area, a data area where user data is recorded, a lead-in area located at the inner side of the data area, and a lead-out area located at the outer side of the data area, in which the inner diameter of the data area is within a range of 35-40 mm.

According to a third aspect of the present invention there is provided a high density disc comprising a center hole having a diameter of 10 mm or more, a clamping area, a data area where user data is recorded, a lead-in area located at the inner side of the data area, and a lead-out area located at the outer side of the data area, in which the clamping area is within a range of 23-26 mm in diameter and the lead-in area is within a range of 33-36 mm in diameter.

For a better understanding of the invention, and to show how embodiments of the same may be carried into effect, reference will now be made, by way of example, to the accompanying diagrammatic drawings in which:
Figure 1 is a perspective view of a conventional disc;
Figure 2 is a sectional view schematically showing a state in which a high density disc is clamped in a disc drive;
Figure 3 is a graph showing FRF RMS values according to the size of a clamping area of a high density disc by a clamping force;
Figure 4 is a graph showing a first resonance frequency according to the size of a clamping area of a high density disc by a clamping force;
Figures 5A, 5B, and 5C are graphs showing amplitudes according to rotational frequency of a spindle motor by the size of a clamping area while changing a clamping force of a high density disc;
Figures 6A, 6B, and 6C are graphs showing amplitudes according to rotational frequency of a spindle motor by rotation speed while changing the size of a clamping area of a high density disc;
Figures 7A, 7B, and 7C are graphs showing amplitudes according to rotational frequency of a spindle motor by the size of a clamping area while changing the rotation speed of a high density disc;
Figure 8 is a plan view of a high density disc according to a preferred embodiment of the present invention;
Figure 9 is a sectional view schematically showing a high density disc according to a preferred embodiment of the present invention;
Figure 10 is a sectional view showing part of the high density disc according to a preferred embodiment of the present invention; and
Figure 11 is a sectional view showing a state in which a high density disc according to another preferred embodiment of the present invention is loaded in a disc drive.

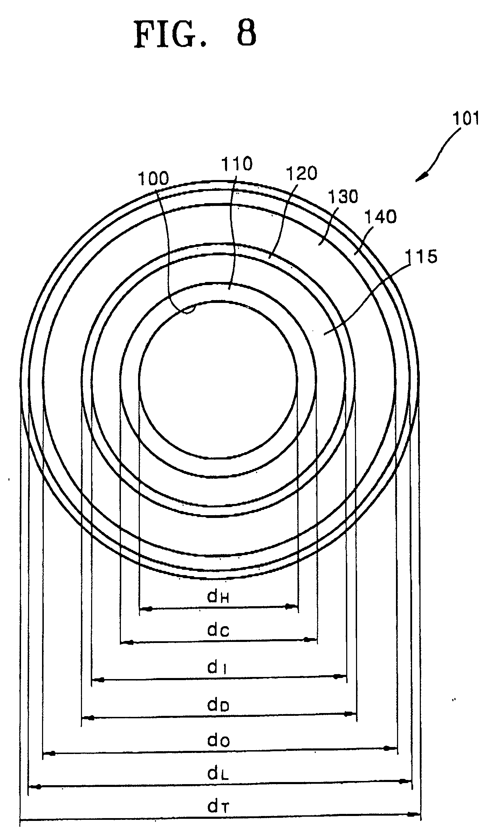

Referring to Figure 8, a preferred high density disc includes a center hole 100, a clamping area 110 to which a clamping force is applied, a data area 130 where user data is recorded, a lead-in area 120 close to the inner side of the data area 130, and a lead-out area 140 close to the outer side of the data area 130. Here, recording of data begins from the lead-in area 120.

When the diameter of the center hole 100 is dH, dH can be set to be 10 mm or more. Preferably, the diameter of the center hole 100 is set 15 mm considering the compatibility of a conventional disc drive. The size of the clamping area 110 is reduced to the minimum to secure a high density recording capacity of a disc. However, even when the size of the clamping area 10 is reduced, a recording and/or reproducing feature of a disc must be maintained or improved. The recording and/or reproducing feature most affected by the size of the clamping area is a vibration feature of a disc during rotation of the disc. That is, as the clamping area increases, more data area can be secured. However, the vibration feature of a disc deteriorates so that recording and/or reproducing of the disc may receive a bad influence. Accordingly, to set a preferable clamping area 110, the vibration feature of a disc during rotation of the disc is measured while changing the size of the clamping area 110, a clamping force applied to the clamping area 110, and a disc rotation speed.

FRF RMS, the first resonance frequency, and amplitude are tested while changing a clamping force to 2.5 N, 3.5 N and 4.5 N, respectively, with respect to cases in which the outer diameter dC of the clamping area 110 is 20<dC<23, 23<dC<26, and 26<dC<29. FRF (frequency response function) RMS shows a ratio of an output acceleration with respect to an input acceleration by RMS (root mean square) to indicate the amount of the overall vibration during rotation of a disc. Also, the cases in which the rotational frequency of the spindle motor (60 of Figure 2) is 20 Hz, 60 Hz, or 100 Hz are tested. The results of the tests are shown in Tables 1, 2, and 3 for the cases in which the diameter of the clamping area 110 is 20<dC<23, 23<dC<26, and 26<dC<29, respectively.

**[Table 2]**

| Clamping Area | Rotational Frequency | Measured Value | 2.5 N | | 3.5 N | | 4.5 N | |
|---|---|---|---|---|---|---|---|---|
| | | | Damper | Disc | Damper | Disc | Damper | Disc |
| 20<dC<23 | 20 Hz | First Resonance Frequency | 29.3 | 102.6 | 29.6 | 113.9 | 29.6 | 109.7 |
| | | Amplitude | 5.8 | 3.9 | 5.8 | 3.7 | 5.7 | 4.5 |
| | | FRF RMS | 27.4 | | 26.4 | | 27.4 | |
| | 60 Hz | First Resonance Frequency | 29.8 | 115.0 | 30.1 | 121.7 | 29.3 | 119.4 |
| | | Amplitude | 6.1 | 5.5 | 6.0 | 5.4 | 5.7 | 6.5 |
| | | FRF RMS | 28.4 | | 28.3 | | 29.0 | |
| | 100 Hz | First Resonance Frequency | 29.3 | 136.4 | 29.6 | 140.4 | 29.6 | 137.7 |
| | | Amplitude | 6.2 | 5.4 | 6.0 | 6.2 | 6.1 | 6.4 |
| | | FRF RMS | 30.8 | | 32.4 | | 31.9 | |

**[Table 3]**

| Clamping Area | Rotational Frequency | Measured Value | 2.5 N | | 3.5 N | | 4.5 N | |
|---|---|---|---|---|---|---|---|---|
| | | | Damper | Disc | Damper | Disc | Damper | Disc |
| 23<dC<26 | 20 Hz | First Resonance Frequency | 29.8 | 110.7 | 29.8 | 117.2 | 30.4 | 115.0 |
| | | Amplitude | 5.5 | 4.5 | 5.6 | 4.2 | 5.7 | 5.1 |
| | | FRF RMS | 27.0 | | 26.1 | | 27.4 | |
| | 60 Hz | First Resonance Frequency | 30.1 | 120.6 | 31.0 | 127.7 | 30.1 | 124.1 |
| | | Amplitude | 6.2 | 5.6 | 6.0 | 5.4 | 6.3 | 7.9 |
| | | FRF RMS | 29.6 | | 28.7 | | 30.8 | |
| | 100 Hz | First Resonance Frequency | 29.8 | 144.4 | 30.1 | 147.2 | 30.1 | 143.1 |
| | | Amplitude | 6.0 | 6.1 | 5.9 | 8.4 | 6.0 | 8.3 |
| | | FRF RMS | 31.3 | | 31.5 | | 33.3 | |

**[Table 4]**

| Clamping Area | Rotational Frequency | Measured Value | 2.5 N | | 3.5 N | | 4.5 N | |
|---|---|---|---|---|---|---|---|---|
| | | | Damper | Disc | Damper | Disc | Damper | Disc |
| 26<dC<29 | 20 Hz | First Resonance Frequency | 29.3 | 115.0 | 29.6 | 121.7 | 29.3 | 119.4 |
| | | Amplitude | 5.4 | 4.5 | 5.2 | 4.35 | 5.3 | 4.1 |
| | | FRF RMS | 26.3 | | 26.0 | | 25.9 | |
| | 60 Hz | First Resonance Frequency | 31.0 | 126.5 | 30.4 | 128.9 | 29.8 | 132.6 |
| | | Amplitude | 5.5 | 7.4 | 5.6 | 5.7 | 5.7 | 4.8 |
| | | FRF RMS | 28.4 | | 28.3 | | 29.0 | |
| | 100 Hz | First Resonance Frequency | 29.3 | 150.0 | 29.0 | 153.0 | 29.3 | 151.5 |
| | | Amplitude | 6.6 | 6.3 | 6.5 | 7.1 | 6.6 | 8.3 |
| | | FRF RMS | 38.6 | | 35.9 | | 37.2 | |

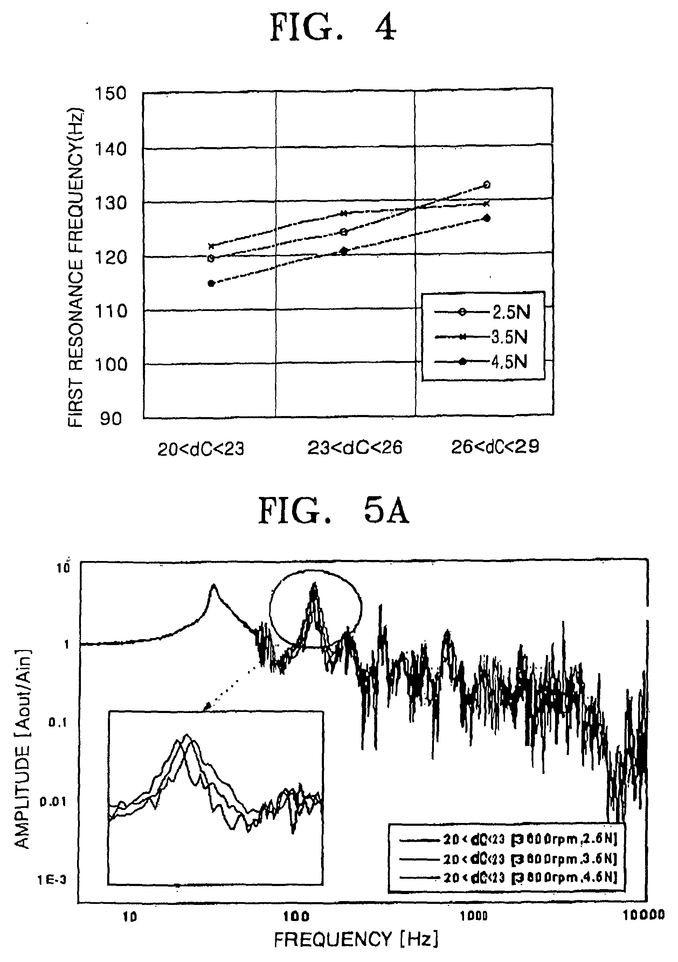

Figure 3 is a graph showing the measured value of FRF with respect to the cases in which the diameter of the clamping area 110 are 20<dC<23, 23<dC<26, and 26<dC<29 when the rotational frequency of a disc is 60 Hz (3600 r.p.m.) in the result of the test. Also, Figure 4 is a graph showing a change of the first resonance frequency with respect to the cases in which the diameter of the clamping area 110 are 20<dC<23, 23<dC<26, and 26<dC<29 when the rotational frequency of a disc is 60 Hz (3600 r.p.m.). In the above tests, a clamping force is set within a range in which the disc does not slip or escape at a rotational speed used.

According to the result of the measurement of a vibration feature affecting a disc, the vibration feature is not greatly affected even when the outer diameter of the clamping area is reduced within a range of 20-29 mm. Referring to Figure 3, the measured value of FRF RMS shows substantially no significant difference according to a change of the clamping area 110 and appears to be superior when a clamping force is 3.5 N. Also, referring to Figure 4, as the size of the clamping area decreases, the first resonance frequency of a disc decreases slightly. It can be seen that there is almost no difference according to a change of the clamping force. According to the above result of the test, the FRF RMS value and the first resonance frequency of a disc are much affected by a change of the rotational frequency of the spindle motor, but not much affected by a change of the size of the clamping area at the same rotational frequency. Such an amount of change hardly affects a recording/reproducing feature of a high density disc.

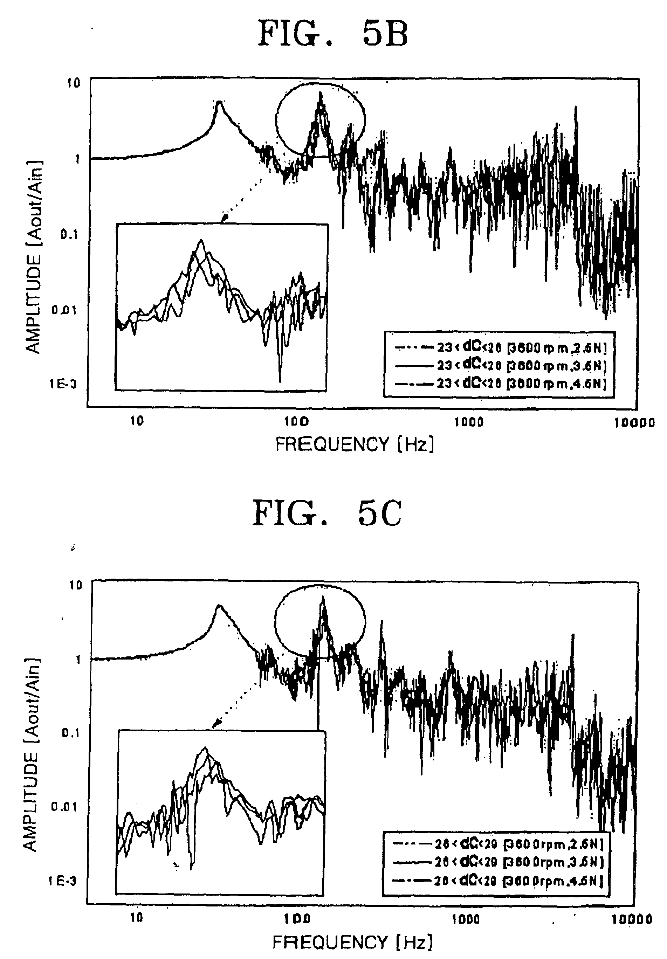

Next, as a test for the amplitude of a high density disc, an amplitude through sign sweep vibration excitation is measured within a range of frequencies between 5-10 KHz with respect to the same clamping area and the same rotation speed of a spindle motor. The results of the measurement is shown in a graph by a clamping force. Figures 5A, 5B, and 5C show the cases in which 20<dC<23, 23<dC<26, and 26<dC<29, respectively. In particular, a magnified portion around 100 Hz which is the first resonance frequency of an optical disc is shown in each drawing. It can be seen that there is no substantial difference according to the clamping force.

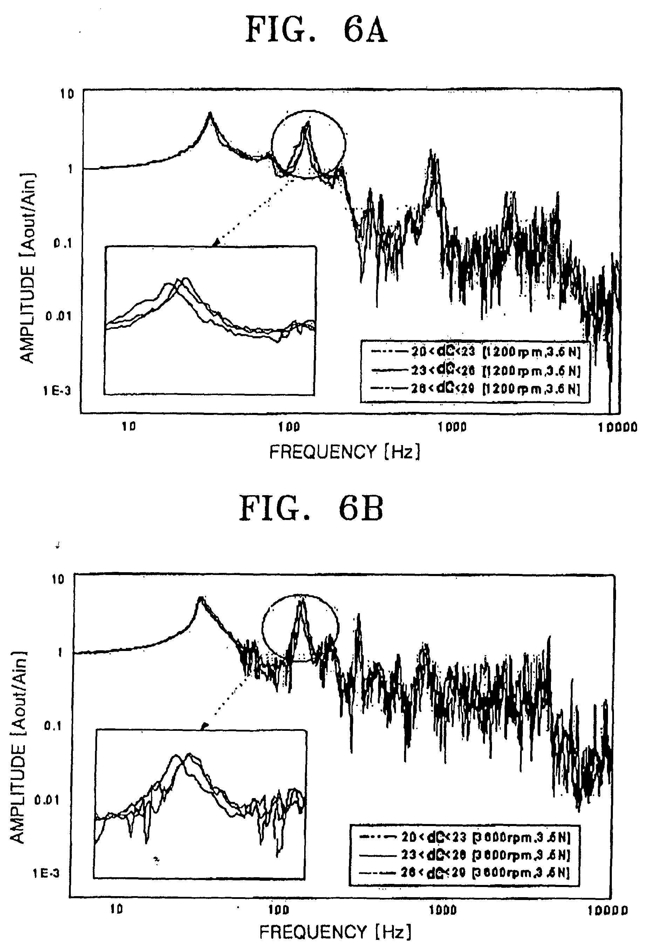

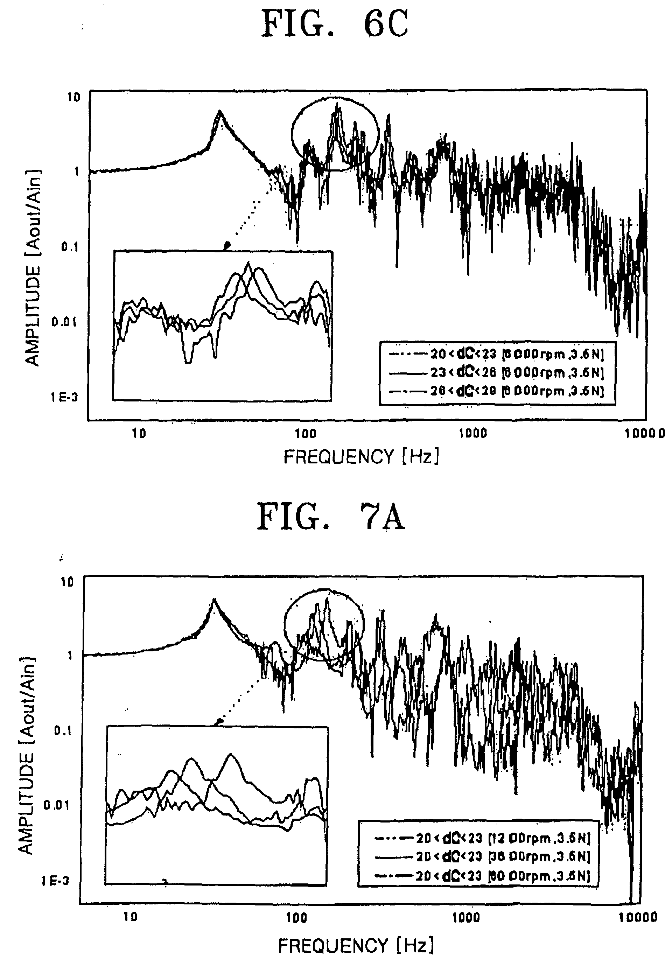

Next, an amplitude through sine sweep vibration excitation is shown by the size of the clamping area within a range of a frequency of 5-10 KHz with respect to the same disc rotation speed and the same clamping force. Figure 6A shows the case in which the rotation speed is 1,200 r.p.m. and the clamping force is 3.5 N. Figure 6B shows the case in which the rotation speed is 3,600 r.p.m. and the clamping force is 3.5 N. Figure 6A shows the case in which the rotation speed is 6,000 r.p.m. and the clamping force is 3.5 N. Here, a magnified portion around 100 Hz which is the first resonance frequency of an optical disc is shown in each drawing. It can be seen that there is no substantial difference according to the clamping area and that the amplitude is within an allowable range.

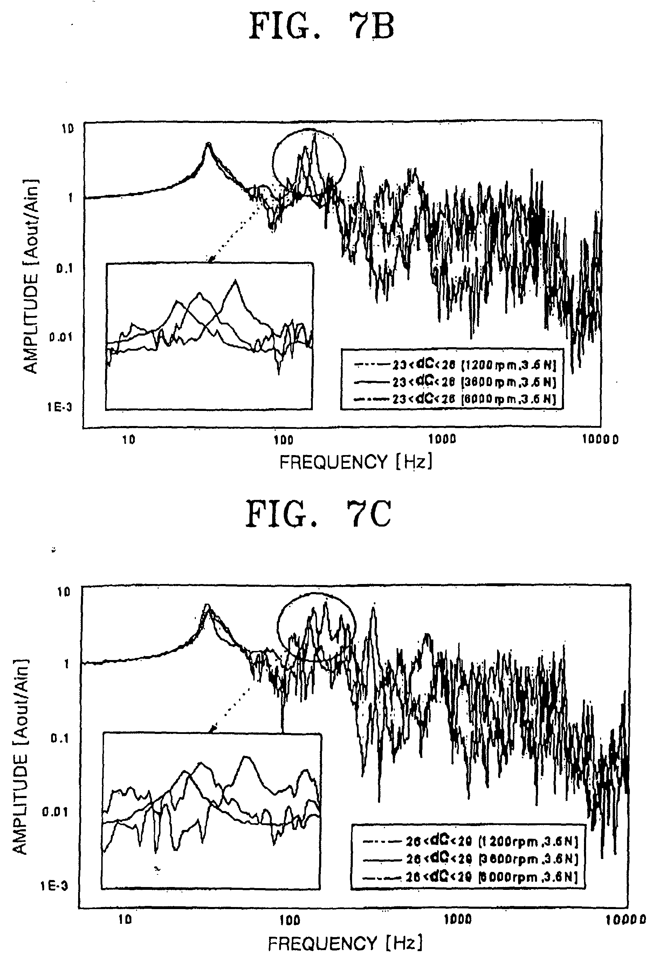

Next, an amplitude through sine sweep vibration excitation is shown by the size of the clamping area within a range of a frequency of 5-10 KHz with respect to the same clamping area and the same clamping force. Figure 7A shows the case in which the size of the clamping area is such that 20<dC<23 and the clamping force is 3.5 N. Figure 7B shows the case in which the size of the clamping area is such that 23<dC<26 and the clamping force is 3.5 N. Figure 7C shows the case in which the size of the clamping area is such that 26<dC<29 and the clamping force is 3.5 N. Here, the measured value of FRF according to a change in rotation speed of a disc shows a slight difference. However, this difference is due to the disc rotation speed of an optical recording/reproducing apparatus, rather than the difference in the clamping area and the clamping force. Thus, based on the above test results, the outer diameter (dC) of the clamping area 110 can be set within a range of 20-26 mm, preferably, 23-26 mm. Accordingly, the inner diameter (dI) where the lead-in area 120 starts and the inner diameter (dD) where the data area 130 starts can be reduced to 33-36 mm and 35-40 mm, respectively. By applying these conditions in common, the outer diameter (dO) of the data area 130 which is a boundary between the data area 130 and the lead-out area 120 is restricted to 62-64 mm, 76-79 mm, or 116-119 mm so that a high density disc having the overall diameter of 65, mm, 80 mm, or 120 mm can be realized.

Next, a preferred embodiment of the present invention will now be described in detail.

A high density disc 101 according to a first preferred embodiment of the present invention, as shown in Figure 8, includes a center hole 100, a clamping area 110, a lead-in area 120, a user data area 130, and a lead-out area 140. The diameter (dH) of the center hole 100 is 15 mm. The diameter (dC) of the clamping area 110 is 23-26 mm. The diameter (dI) of the lead-in area 120 is 33-36 mm. The diameter (dD) of the data area 130 is 36-116 mm. The diameter (dO) of the lead-out area 140 is 116-118 mm. The overall diameter (dT) of the disc 101 is 120 mm.

Here, a non-recording area 115 is provided between the clamping area 110 and the lead-in area 120, which has a stack ring (not shown) for preventing deterioration in productivity due to contact of a disc recording surface when manufactured discs are stacked during an injection process of a disc.

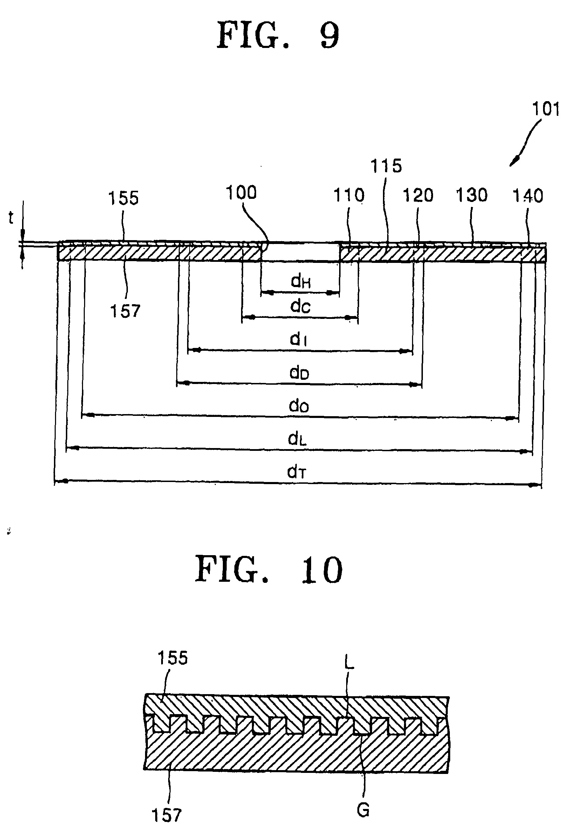

Figure 9 shows a profile of a high density disc. Referring to the drawing, the high density disc includes at least one transparent substrate 155 and at least one recording layer 157. The thickness (t) of the transparent substrate 155 may be 0.2 mm or less. In particular, when the thickness of the transparent substrate 155 is 0.1 mm, considering the compatibility with the same drive for recording and/or reproducing conventional CDs or DVDs, a polycarbonate disc having a thickness of 1.1 mm is preferably used as a reinforcement plate, thus making the disc to have a 1.2 mm thickness. As a method of manufacturing a 0.1 mm transparent substrate, there is a method of performing spin-coating on a polycarbonate disc having a thickness of 1.1 mm to have a thickness of 0.1 mm and a method of combining a 0.1 mm thick sheet by UV curing. This disc may be a phase change disc or a magneto-optical disc.

Also, as shown in Figure 10, a land track L and a groove track G are formed at least one of the transparent substrate 155 and the recording layer 157 are formed. Data can be recorded at least one of the land track L and the groove track G. Multi-layer recording is possible on the transparent substrate 155 and the recording layer 157. To increase recording density of the high density disc, there is a method of narrowing a track pitch which is an interval between tracks and a method of reducing a minimum mark length (MML).

However, the track pitch or the MML can be changed according to the design of error correction code (ECC) and modulation. For example, when data is recorded on the land L and the groove G, the track pitch is 0.6 µm or less and the LLM is 0.22 µm or less. When data is recorded on the groove G, the track pitch is 0.35 µm or less and the MML is 0.22 µm or less. Also, an objective lens having an NA of 0.85 and a laser diode having a wavelength of 400 nm are used in an optical pickup (not shown) for recording and/or reproducing a high density disc.

When data is recorded on the high density disc according to the first preferred embodiment of the present invention under the above conditions, a recording capacity of 25 GB is secured with respect to a single side disc where only one side is recorded.

A high density disc 101 according to a second preferred embodiment of the present invention includes a center hole 100, a clamping area 110, a lead-in area 120, a user data area 130, and a lead-out area 140. The diameter (dH) of the center hole 100 is 15 mm. The diameter (dC) of the clamping area 110 is 23-26 mm. The diameter (dI) of the lead-in area 120 is 33-36 mm. The diameter (dD) of the data area 130 is 36-76 mm. The diameter (dO) of the lead-out area 140 is 76-78 mm. The overall diameter (dT) of the disc 101 is 80 mm.

In this case, the NA of an objective lens, the wavelength of a laser diode, the track pitch and the minimum mark length which are the same as those in the above-described embodiment may be applied. A recording capacity of 7.8 GB can be secured with respect to a single side. Thus, the recording capacity of the high density disc according to the present invention considerably increases compared to a conventional disc having the same diameter.

A high density disc according to a third preferred embodiment of the present invention includes a center hole 100, a clamping area 110, a lead-in area 120, a user data area 130, and a lead-out area 140. The diameter (dH) of the center hole 100 is 15 mm. The diameter (dC) of the clamping area 110 is 23-26 mm. The diameter (dI) of the lead-in area 120 is 33-36 mm. The diameter (dD) of the data area 130 is 35-40 mm. When the inner diameter (dD) of the data area 130 is 36 mm, the outer diameter (dO) may be within a range of 39-44 mm. When the inner diameter (dD) of the data area 130 is 40 mm, the outer diameter (dO) may be within a range of 42-48 mm.

More preferably, the diameter (dH) of the center hole 100 may be 15 mm. The diameter (dC) of the clamping area 110 may be 23-26 mm. The diameter (dI) of the lead-in area 120 may be 33-36 mm. The diameter (dD) of the data area 130 may be 36-42 mm. The diameter (dO) of the lead-out area 140 may be 42-44 mm. The overall diameter (dT) of the disc 101 may be 45 mm. Here, when the NA of the objective lens of an optical pickup is 0.85, the wavelength of a laser diode is 400 nm, the track pitch in a land and groove recording method is 0.6 µm or less, and the minimum mark length is 0.22 µm or less, a recording capacity of 650 MB is secured with respect to a single side of a disc.

Thus, a small disc having the overall diameter (dT) of 45 mm and simultaneously a recording capacity of about 650 MB which is the recording capacity of a conventional CD can be secured.

The specifications of the high density disc according to the first through third preferred embodiment of the present invention are shown in Table 5.

**[Table 5]**

| | Specifications | | |
|---|---|---|---|
| Diameter of disc (mm) | 120 | 80 | 45 |
| Lead-out area (mm) | 116-118 | 76-78 | 42-44 |
| Data area (mm) | 36-40 | 36-76 | 36-42 |
| Lead-in area (mm) | 33-36 | 33-36 | 33-36 |
| Clamping area (mm) | 23-26 | 23-26 | 23-26 |
| Center hole (mm) | 15 | 15 | 15 |
| Recording capacity (GB) | 25 | 7.8 | 0.65 |
| Wavelength (nm) | 400 | 400 | 400 |
| NA of objective lens (NA) | 0.85 | 0.85 | 0.85 |
| Track pitch (L/G, /G recording) (µm) | 0.3/0.325 | 0.3/0.325 | 0.3/0.325 |
| Minimum mark length (L/G, /G recording) (µm) | 0.214/0.197 | 0.213/0.197 | 0.213/0.197 |

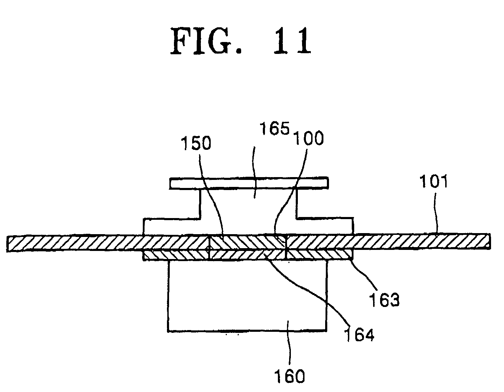

Meanwhile, when a disc is installed on a turntable (63 of Figure 2), the protruding portion 63a of the turntable 63 is inserted in the center hole 100 so that the disc can be stably loaded. However, as shown in Figure 11, a metal plate 150 can be inserted in the center hole 100. in this case, since a magnetic body 164 is provided at a turntable 163 and the metal plate 150 is attracted by the magnetic body 164, the disc can be stably installed at the turntable 163. When the disc is accommodated on the turntable 163, the disc is pressed by a clamping member 165 so that the disc is fixed. When the metal plate 150 is provided in the center hole 100 of the disc, since there is no need to provide the clamping member 165 with an additional metal member, a disc drive apparatus can be made slim. Here, reference numeral 160 denotes a spindle motor.

The high density disc according to the present invention makes the diameter of a center hole of the disc to be 15 mm to be compatibly used in a conventional optical disc drive, and newly specifies the clamping area and the data area to secure a recording capacity of the disc while maintaining a recording and/or reproducing feature of the disc. Accordingly, a high density recording capacity as well we portability can be obtained by decreasing the size of the high density disc while using the conventional disc drive.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A high density disc comprising a center hole (100) having a diameter of 10mm or more, a clamping area (110), a data area (130) where user data is recorded, a lead-in area (120) located at an inner side of the data area, and a lead-out area (140) located at an outer side of the data area, wherein an inner diameter of the clamping area (110) is within a range of 20-26 mm.

2. The disc as claimed in claim 1, wherein an inner diameter of the lead-in area (120) is within a range of 33-36 mm.

3. The disc as claimed in either claim 1 or 2, wherein an inner diameter of the data area (130) is within a range of 35-40 mm.

4. The disc as claimed in claim 3, wherein, when the inner diameter of the data area (130) is 36 mm, the outer diameter thereof is within a range of 39-44 mm.

5. The disc as claimed in claim 3, wherein, when the inner diameter of the data area (130) is 40 mm, the outer diameter thereof is within a range of 42-48 mm.

6. The disc as claimed in claim 3, wherein a boundary between the data area (130) and the lead-out area (140) is within a range of 62-64 mm.

7. The disc as claimed in claim 3, wherein a boundary between the data area (130) and the lead-out area (140) is within a range of 76-79 mm.

8. The disc as claimed in claim 3, wherein a boundary between the data area (130) and the lead-out area (140) is within a range of 116-119 mm.

9. The high density disc of any preceding claim, wherein the clamping area (110) is within a range of 23-26 mm in diameter and the lead-in area (120) is within a range of 33-36 mm in diameter.

10. The disc as claimed in claim 9, wherein the data area (130) is within a range of 36-116 mm in diameter and the lead-out area (140) is within a range of 116-118 mm in diameter.

11. The disc as claimed in claim 9, wherein the data area (130) is within a range of 36-76 mm in diameter and the lead-out area (140) is within a range of 76-78 mm in diameter.

12. The disc as claimed in claim 9, wherein the data area (130) is within a range of 36-42 mm in diameter and the lead-out area (140) is within a range of 42-44 mm in diameter.

13. The disc as claimed in any preceding claim, wherein the high density disc comprises a groove track (G) and a land track (L), and recording can be performed at least one of the groove track and land track.

14. The disc as claimed in claim 13, wherein, when recording is performed at the groove track, a track pitch is 0.35 µm or less.

15. The disc as claimed in claim 13 or 14, wherein a minimum mark length recorded at the groove track is 0.22 µm or less.

16. The disc as claimed in claim 13, wherein, when recording is performed at the groove track and land track, a track pitch is 0.6 µm or less.

17. The disc as claimed in claim 16, wherein a minimum mark length recorded at the groove track and land track is 0.22 µm or less.

18. The disc as claimed in any preceding claims, wherein the high density disc comprises at least one transparent substrate (155) and at least one recording layer (157), and the thickness of the transparent substrate is 0.2 mm or less.

19. The disc as claimed in any preceding claim, wherein a metal plate (150) is inserted into the center hole (100).

20. A high density disc comprising a center hole (100) having a diameter of 10 mm or more, a clamping area (110), a data area (130) where user data is recorded, a lead-in area (120) located at an inner side of the data area, and a lead-out area (140) located at an outer side of the data area, wherein an inner diameter of the data area is within a range of 35-40 mm.

21. The disc as claimed in claim 20, wherein, when the inner diameter of the data area (130) is 36 mm, the outer diameter thereof is within a range of 39-44 mm.

22. The disc as claimed in claim 20, wherein, when the inner diameter of the data area (130) is 40 mm, the outer diameter thereof is within a range of 42-48 mm.

23. The disc as claimed in any of claims 20 through 22, wherein a boundary between the data area (130) and the lead-out area (140) is within a range of 62-64 mm.

24. The disc as claimed in any of claims 20 through 22, wherein a boundary between the data area (130) and the lead-out area (140) is within a range of 76-79 mm.

25. The disc as claimed in any of claims 20 through 22, wherein a boundary between the data area (130) and the lead-out area (140) is within a range of 116-119 mm.

26. The disc as claimed in any of claims 20 through 25, wherein a metal plate (150) is inserted into the center hole (100).

27. The disc as claimed in any of claims 20 through 26, wherein the high density disc comprises at least one transparent substrate (155) and at least one recording layer (157), and the thickness of the transparent substrate is 0.2 mm or less.

28. The disc as claimed in any of claims 20 through 27, wherein the high density disc comprises a groove track (G) and a land track (L), and recording can be performed at least one of the groove track and land track.
